# EUROPEAN PATENT APPLICATION

(11) **EP 1 970 674 A1**
(43) Date of publication of application: **17.09.2008**
(21) Application number: 08250866.4
(22) Date of filing: 13.03.2008
(51) Int. Cl.: G01F 1/24, G01F 1/66, G01P 5/02

(54) **Variable area flow rate meter using optical sensing of float position in the duct**

(30) Priority: 15.03.2007 US 686749
(71) Applicant: Smith, Daniel J., Lakeville, MN 55044 (US); Lakhan, Haresh, Eagan MN 55123 (US); Smisek, Quentin, Minneapolis, MN 55417 (US)
(72) Inventor: Smith, Daniel J., Lakeville, MN 55044 (US); Lakhan, Haresh, Eagan MN 55123 (US); Smisek, Quentin, Minneapolis, MN 55417 (US)
(74) Representative: Harland, Linda Jane

(57) **Abstract**

A flowmeter (10) has a variable area, vertically-oriented duct (35) through which flows fluid whose flow rate is to be determined. A float (30) in the duct (35) assumes a position in the duct (35) that depends on the flow rate of fluid in the duct. A window (52) is located at an end of the duct (35) in alignment with a longitudinal axis of the duct. A transducer unit (50) projects a signal beam comprising either light in the ultraviolet, visible, or infrared spectrum, or ultrasound energy. The signal beam propagates in a beam through the window (52) and along the axis toward the float (30). The transducer (50) includes a sensor (60) that detects the signal energy returned by the float (30) by reflection or some other mechanism to the transducer unit (50). The intensity or delay time in the returned signal energy indicates the position of the float (30) in the duct (35), from which the fluid flow rate may be determined.

## Description

### BACKGROUND

A variable area volumetric flow rate meter, hereafter simply VA flowmeter, uses a vertical sensing duct through which flows a fluid whose volumetric flow rate is to be measured. The sensing duct has a cross section area that smoothly increases along the length of the sensing bore, typically increasing upwards but that may also increase downwards. Typically, the fluid flows into an end of the duct having the smaller cross section area, and out of the duct at the larger cross section area although variations on this design are possible.

In any duct of changing cross section area, velocity at each point along the duct, of a fluid flowing in the duct varies inversely to the area at that point. While the situation is somewhat different for flow of a compressible gas in such a duct, for low flow velocities, in general the velocity will also decrease as duct area increases.

The sensing duct for such a flowmeter contains a float occupying a fraction of the duct area. Normally, the specific gravity of the float is somewhat higher than the fluid flowing in the duct, so the term "float" is a bit misleading. When dealing with liquids however, it is actually possible to use a float that does float. In such a case, buoyancy of the float is counteracted by downward liquid flow. The following discussion assumes a float slightly heavier than the fluid flowing through the sensing duct.

Fluid flowing through the duct and past the float creates a lift force on the float that shifts the float from the bottom of the duct. The lift force has viscous drag and momentum components. The lift force depends on the fluid velocity around the float, increasing with increasing flow velocity.

The float will rise or fall to a point where the drag created by the velocity of the adjacent fluid flowing past the float exactly equals the gravitational force provided by the float less the buoyant force on the float applied by the fluid in the duct. Regardless of the volumetric flow rate in the duct, the float will always reach the point in the duct where the velocity of the adjacent fluid exactly balances the net of float weight less buoyant force on the float. The product of the area of the duct where the float finds equilibrium and the velocity of the fluid adjacent to the float equals the volumetric flow rate of fluid through the duct.

If the fluid is a gas, buoyancy force is very small, indeed may even be ignored, and the gravitational force predominates. If the fluid is a liquid, the buoyancy force may be significant. In an upwardly diverging duct through which a liquid flows, relative specific gravities of the liquid and the float are important in determining the float position for a given flow rate. A downwardly diverging duct with a float whose specific gravity is less than the liquid in the duct is most useful for measuring small liquid flow rates because buoyancy and gravity forces oppose creating a relatively small net force. Normally, the float specific gravity will be larger than that of the fluid, perhaps substantially larger in the case where the fluid is a gas.

Where fluid flow is measured in an upwardly diverging duct, the float specific gravity is normally greater than that of the fluid. The fluid itself; the specific gravity, shape, size, and total weight of the float; and the duct geometry should all be chosen so that the available range of the float's vertical position in the duct allows the expected range of flow rates to be measured.

The flow rate can be calibrated against the float position to accurately indicate the flow rate, In the simplest situation, an operator provides several different known fluid flow rates to the flowmeter and records the position of the float for each flow rate. This provides a table in which the operator can interpolate to determine the flow rate with good accuracy.

Some applications for these flowmeters require them to handle corrosive fluids without contaminating the fluid flowing through the flowmeters. For most of these types of fluids, materials exist that are inert with respect to the fluid. All of the flowmeter surfaces in contact with the fluid must comprise such inert material to avoid contaminating the fluid.

Determining the float position in the sensing duct is sometimes difficult. Magnetic position sensing requires magnetic material in the float. Corrosive fluids may attack such magnetic materials. Even if the magnetic material is completely embedded in the float, users are concerned that the corrosive fluid may penetrate the float and cause contamination.

Alternatively, an optical or other sensor may be located along the length of the sensing duct, but such a sensor must be quite large and complex. Such sensing requires the sensing duct to be made of transparent material, or at least have a transparent window along the sensing duct length, which complicates the sensing duct structure.

### BRIEF DESCRIPTION OF THE INVENTION

A flowmeter for providing a signal indicating fluid flow rate through the flowmeter has a vertical, tapered duct defined by a duct wall. An axis extends the length of the duct along the fluid flow. A first opening in the duct receives flow of fluid whose flow rate is to be measured. Fluid exits the duct through a second opening. A float within the duct shifts position along the duct axis. The float's vertical position in the duct indicates the fluid flow rate.

The flowmeter further comprises a window forming a portion of the duct wall in alignment with the duct axis. The window is transparent to a signal beam and positioned adjacent to one opening of the duct. The signal beam may comprise light in the visible, infrared, ultraviolet, or visible spectrum, or may comprise ultrasound energy. A signal beam source external to the duct and adjacent to the window transmits the signal beam through the window toward the float.

The float has a feature that returns a portion of the signal beam shining on the float toward the window. The feature may be a beam-reflecting surface on the float. Where the beam is light, the feature may be a property of the float material that causes the beam to diffuse or diffract and return to the window. The float may contain an embedded element such as a metal plate that reflects light.

A signal beam sensor is located external to the duct and receives through the window, signal beam energy returned from the float, and that the signal beam source had previously transmitted toward the float. The signal beam sensor provides a sensor signal indicating the level of signal beam energy received by the signal beam sensor. For an ultrasound signal beam, the same transducer may comprise both the source and the sensor.

A controller receives the sensor signal and computes the position of the float therefrom. By calibrating the fluid flow in the duct with the float position, the controller can provide a signal indicating the rate of fluid flow in the duct. At the present time, the intensity of the returned light signal beam seems to most effectively indicate the float position. The relatively low speed of sound allows the controller to measure the time for individual pulses of ultrasound energy to return to the sensor.

### BRIEF DESCRIPTION OF THE DRAWINGS

Fig. 1 shows a simplified version of the invention.
Figs. 2 and 2a are block diagrams of transducers for producing a signal beam useful in measuring position of a float in a VA flowmeter.
Fig. 3 is a two-transducer version of the invention.
Fig. 4 is a detail of one design of a float used by the invention.
Fig. 5 is a block diagram of a controller suitable for operating the flowmeter.
Fig. 6 is a flow chart of firmware for calculating the current value of the flow rate.
Fig. 7 is a flow chart of firmware for assisting in determining parameters for calculating the current value of the flow rate.
Fig. 8 is a block diagram of microprocessor-based hardware for linearizing sensor output.

### DESCRIPTION OF THE PREFFERED EMBODIMENTS

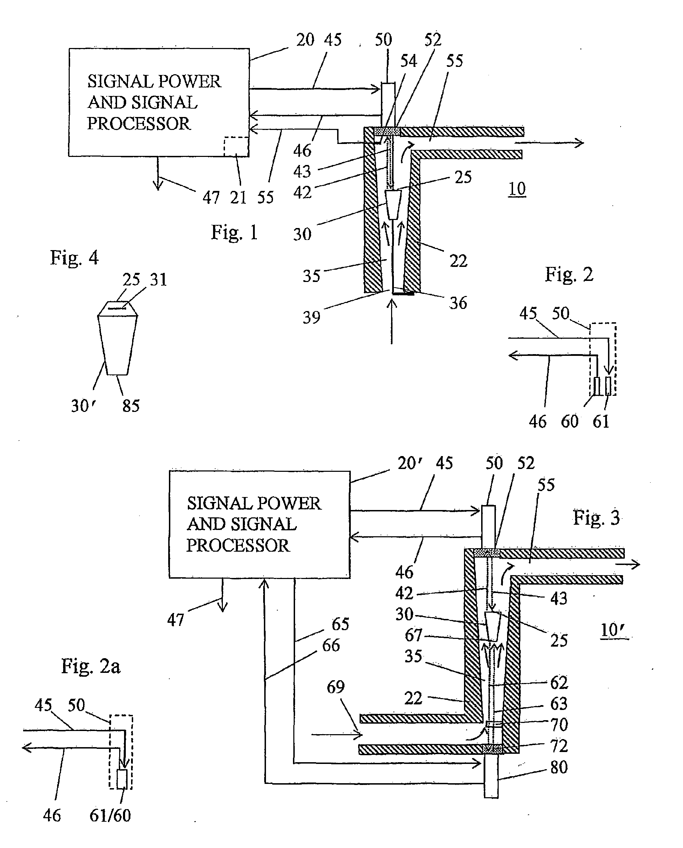

Fig. 1 shows in section a simplified variable area flowmeter 10 incorporating one version of the invention. Flowmeter 10 has a duct 35 defined by a wall 22. Duct 35 has an inlet port 39 where fluid flow enters duct 35 and an outlet port 55 where fluid exits duct 35. Duct 35 diverges upwards, so that the cross section area of duct adjacent to outlet port 55 is substantially larger than the cross section area adjacent to inlet port 39. Duct 35 has a longitudinal axis extending along the duct in the direction of fluid flow.

A float 30 is present within duct 35. The term "float" in this context is a bit misleading, since float 30 will normally, for reasons already explained, have a specific gravity substantially greater than the fluid flowing in duct 35, and thus does not float at the top of duct 35. The frustro-conical shape shown for float 30 in Fig. 1 is suitable for a variety of flowmeter designs.

The dimensions of float 30 should be sufficiently large relative to the duct 35 diameters to maintain the float 30 axis substantially in alignment with the axis of duct 35. Alternatively, a guide rod 36 attached at either one end or both ends (as shown) of duct 35 is useful for maintaining the axis of float 30 in approximate parallel alignment with the axis of duct 35.

The VA flowmeter 10 shown in Fig. 1 uses a transducer unit 50 to detect the position of float 30 within duct 35, Unit 50 is shown in more detail in Fig. 2 as including a signal beam source 61 and a signal beam detector 60. In one version of this invention, the signal beam is light. In this case, signal beam source 61 is preferably a laser diode or LED that may provide either a visible, an IR, or a UV beam 43 directed more or less parallel to the axis of duct 35 and toward float 30.

The signal beam may also comprise ultrasound energy, in which signal beam source 61 may comprise a sound transducer such a piezoelectric transducer capable of generating an ultrasound signal. Such transducer devices are now widely used in echocardiogram devices.

Regardless of the type of beam produced, signal beam source 61 receives operating power from a power source and signal processor 20 on a path 45. A signal beam detector 60 provides a signal on path 46 indicating the intensity of the energy in the signal beam 42 returned from float 30. Where the signal beam is light, detector 60 is preferably a photodiode.

If the signal beam comprises ultrasound energy, then detector 60 comprises a piezoelectric transducer. In a preferred version of an ultrasound source 61, the same component comprises both source 61 and sensor 60, as suggested in Fig. 2a.

A system 10 having a source 61 producing ultrasound may operate in a pulsed mode. The delay time for the reflected signal beam is on the order of hundreds of µsec for an ultrasound signal beam where the spacing from transducer 61 to float 30 is several inches. This time interval is easy to measure with modem electronic components.

A window 52 that is transparent to the signal beam provided by source 61 is placed at one end of duct 35 in alignment with the duct 35 axis. In Fig. 1, window 52 is placed near outlet port 55, but may be also advantageously placed near inlet port 39.

Transducer 50 is mounted on the outside surface of window 52 so that energy from source 61 passes through window 52 and the fluid within duct 35, and impinges on float 30. For ultrasound beam, a window made of hard plastic with a thickness of 0.01 - .10 in. is suitable.

In some arrangements for light signal beams, sensor 60 may be at one end of duct 35 and source 61 may be at the other end. Such an arrangement has a window transparent to the signal beam for each of the signal beam source 61 and the sensor 60.

Arrow 42 symbolizes the signal beam from source 61 reflecting from or otherwise returning from float 30 through the fluid within duct 35 to detector 60. For a light signal beam, the intensity of the returning signal beam increases with decreasing distance between the top of float 30 and transducer unit 50 in a predictable and repeatable way.

A system 10 using a single ultrasound signal beam source/sensor 61/60 preferably operates in a pulsed range-finding mode, where the time for a pulse to return to sensor 60 is a precise measure of the distance of float 30 from source/sensor 61/60. In such a system 10, processor 20 issues a drive pulse perhaps 200- 400 µsec, long each 1 to 25 ms. Of course, the float 30 position measurement is critically dependent on the sound velocity within the fluid flowing in duct 35. Processor 20 includes a timer element 21 or other means such as signal phase shift for measuring the time between release of each pulse of ultrasound energy and the return or echo of that pulse received at sensor 60.

Controller 20 periodically provides power on path 45 to activate signal beam source 61. In the case of a light signal beam, the energy returning to detector 60 from float 30 causes detector 60 to provide a signal on path 46. The signal on path 46 indicates the signal beam energy intensity at detector 60, and is usually quite constant for a given float position and fluid type. That is, the signal on path 46 for a given light signal beam energy level and float position typically does not change significantly over time for a particular fluid.

Therefore, the signal on path 46 can be empirically correlated with the flow rate. Typically, the signal will be processed and digitized before use. The position of float 30 in the sensing tube provides information in the returned light or ultrasound from which the float 30 position can be derived. The float position and the intensity of the either the returned light beam or the delay in return of an ultrasound pulse may be correlated during a calibration process. The intensity of or delay in the returned energy may then be used to indicate float position, which indicates the flow rate. Controller 20 provides the flow rate in a flow rate signal carried on path 47. The flow rate signal can be used to provide a visible indication of the flow rate, or in a closed loop system for process control, for example.

Accuracy of float 30 position improves by using the temperature of the fluid in duct 35 in the calculations, For example, sound velocity in a fluid depends to some extent on the temperature of the fluid. A temperature sensor 54 mounted within duct 35 provides a fluid temperature signal on path 55 to processor 20. Processor 20 can

Flowmeter 10 is particularly well-suited for use with corrosive fluids. No metallic materials need contact the fluid flowing in duct 35. Every component in the system may be non-reactive for the particular fluid involved. No complicated float position sensing along the length of duct 35 is necessary. The walls 22 need not even be transparent.

For light-based float 30 sensing, signal beam source 61 may comprise a laser diode light source projecting a collimated, coherent beam through the transparent window axially along the sensing duct. Using a high-intensity multi-wavelength incandescent light source is another option but may have less good results due to intensity drift over time. A reflective top 25 on the float 30 may reflect a portion of the beam from the light source 61 back through the window 52 to detector 60.

A number of alternatives exist for the structure of float 30 that returns the light signal beam to sensor 60. Float 30 may have a reflective element 31 (Fig. 4) embedded in float 30. Float 30 may have a diffraction grating on the surface 25 facing source 61 that diffracts the light beam impinging on float 30.

Another option that may be useful is to form float 30 from a material that is partially transparent or translucent to the signal beam. Such a type of material allows an amount of signal beam energy to return to the sensor 60 through diffusion and backscatter rather than through reflection.

For a signal beam comprising light energy, Teflon (Reg. trademark of Dupont Corp.), PFA, PTFE, FEP, and TFM sapphire (possibly too expensive for most applications), various ceramics, and non-Teflon CTFE are some of the materials that seem to have the proper amounts of translucency and that are also inert and non- contaminating with respect to a wide range of corrosive materials. The sensing duct may have a reflective outer surface in this case to increase the intensity of the returned light.

In one version of the invention the float top surface 25 is slightly convex, producing a diverging reflected light beam 42, although other float top shapes may be suitable as well. A diverging beam allows the beam reflection to reliably impinge on detector 60 regardless of the angular orientation of the float. A radius of curvature of the reflective float top on the order of 2.5 cm. may be suitable, In any case, the float top surface 25 preferably has a uniform finish so that rotation of the float will not in itself affect the intensity of the returned light. Convex, concave, flat, and grooved float surfaces may also provide returned light that accurately indicates float position.

Suitable values for light beam wavelength, intensity, and size depend on the characteristics of the fluid. For example, when measuring the flow of fluids such as corrosive aqueous liquids and organic solvents, a light beam with a wavelength of 850 mm., an intensity of 1.25 mw., and a cross section diameter of 4.6 mm. is suitable.

The distance the beam travels through the fluid also reduces beam intensity. In actual practice, both float distance-based attenuation and fluid attenuation may cooperate to attenuate the beam in a way that allows accurate float position sensing.

Float position sensing can also use a piezoelectric element 61/60 that generates ultrasound pulses that reflected back to element 61/60 from float 30. The delay time for the reflected sound depends on the float position in the sensing tube as well as the characteristics of the fluid. Since sound travels much more slowly than does light, time delays is much easier to measure and result in more accurate float position sensing. The window through which the sound beam passes must then be of the type that is transparent to that sound, or at least does not attenuate the sound substantially.

One possible transducer device suitable to function as source/sensor 61/60 is available from International Transducer Corp., Santa Barbara, CA and has Model No, ITC-9072. The ITC-9072 device can function as both a source and sensor for ultrasound. It has a suggested operating frequency of 150 kHz. Other devices have different operating frequencies. Best judgment at this time suggests that a frequency in the range of 40 - 5000 kHz will provide good results. The signal beam must be able to pass easily through window 52, and yet reflect strongly from float 30, At the same time, the fluid flowing through duct 30 should not significantly attenuate the signal. The use of a element 31 that strongly reflects ultrasound may improve performance.

Fig. 3 shows a further version of a flowmeter 10 that is in many ways similar to flowmeter 10 shown in Fig. 1, and that uses a signal beam comprising light. Similar elements have similar or identical reference numbers.

Inlet port 69 provides fluid to duct 35. A second window 72 is positioned at the small end of duct 35, A transducer unit 80 whose design is essentially identical to that of transducer unit 50 has a light source positioned to project light toward the bottom end of float 30 as indicated by beam 63. Light returns from float 30 as beam 62 indicates and is detected by a detector in transducer unit 80.

A finger or arm 70 supports float 30 during times of little or no fluid flow through duct 35. Finger 70 may be very narrow to thereby avoid interfering either with fluid flow or with light beams 62 and 63.

Controller 20 provides power for operating the light source within transducer unit 80 on path 65. A signal carried on path 66 indicates the light level detected by the detector internal to transducer unit 80.

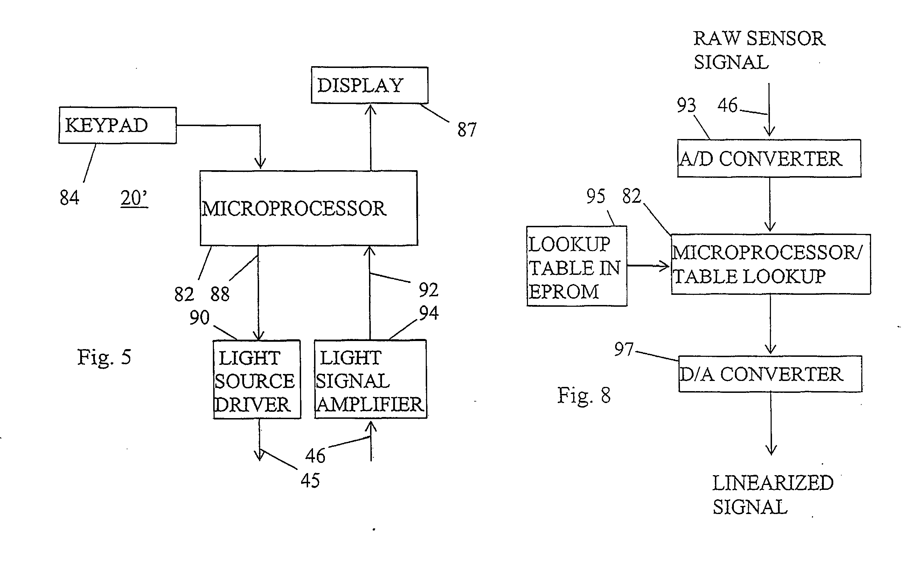

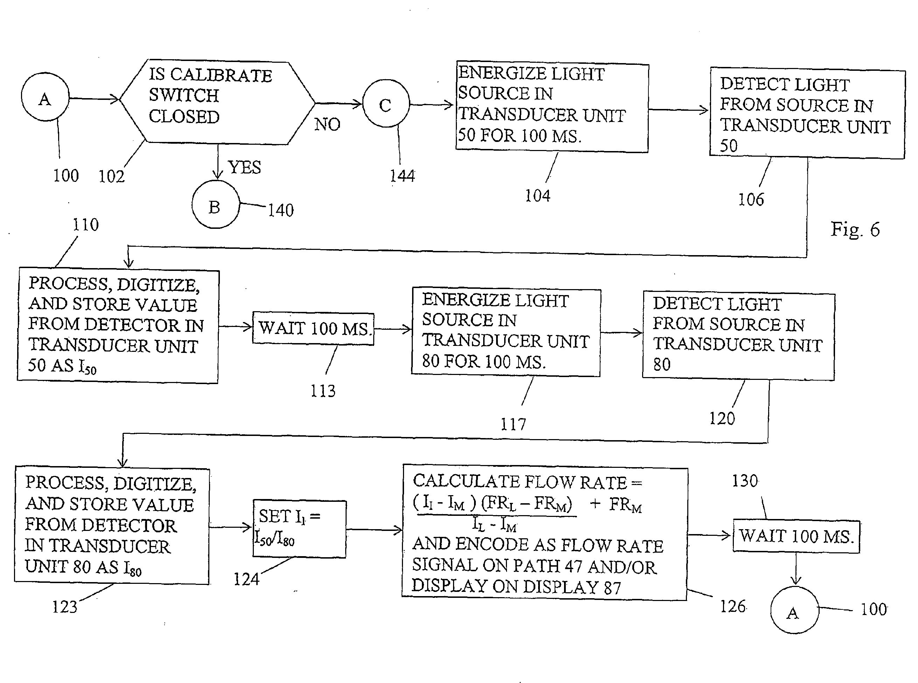

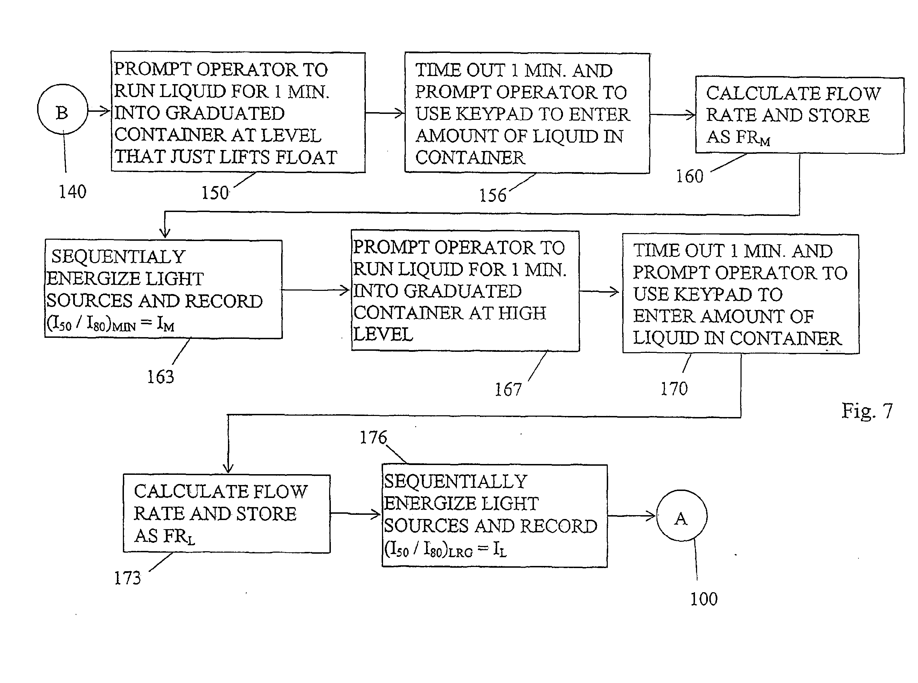

Controller 20 operates in a mode somewhat different from that of controller 20 because of extra information provided by the second transducer 80. Fig. 5 shows the configuration of a simple controller 20. A microprocessor 80 is designed to execute software or firmware that implements the functions described in Figs. 6 and 7, flow charts that describe firmware for operating flowmeter 10.

A keypad 84 allows operator input to microprocessor 82. Keypad 84 has keys 0 - 9 for number entry and has a calibrate key and an enter key.

A display 87 provides numeric information for an operator. Computations by microprocessor 82 may generate the numbers displayed on display 87, Microprocessor 82 may also cause display 87 to show keypad 84 entries.

Microprocessor 82 provides a signal on path 88 causing a light source driver 90 to provide power on path 45 for illuminating light source 60. A light signal amplifier 94 amplifies the light sensor signal on path 46 and sends the amplified signal to microprocessor 82 on path 92.

The firmware defined by Figs. 6 and 7 discloses one way that a microprocessor can control operation of flowmeter 10. The implementation of Figs. 6 and 7 is for use with a duct 35 whose cross section area increases linearly upwards with distance from finger 70. The calculations in Fig. 6 assume that the intensity of beams 42 and 62 varies linearly with the distance of float 50 from finger 70, which is reasonable, The fluid flowing in duct 35 should be a liquid, One should realize that many other computer- controlled operating modes may be used as well.

Fig. 6 is a continuously running operating loop for controlling flowmeter 10. Fig. 7 shows firmware that controls and simplifies calibration of flowmeter 10.

In Fig. 6, connector symbol A 100 indicates the beginning and end of the loop. If the calibrate key is operated, decision element transfers instruction execution to connector element B 140 in Fig. 7.

If calibration is not commanded, then activity element 104 causes light source 60 to illuminate float 30 for 100 ms. Since float 30 may not be totally stable in its position in duct 35, this provides an opportunity for microprocessor 82 to average the position of float 30. Activity element 106 samples the light intensity from float 30, typically several times. Activity element 110 processes the signals from light sensor 60. This may include multiple sensing instances to measure the average float 30 position accurately. The intensity value for light returned. from float 30 is recorded as I₅₀.

Activity element 113 delays further processing for 100 ms., in case the light source driver provides the timer function for operating light source 61. Activity elements 117, 120, and 123 perform a similar function for transducer unit 80. The intensity of the light returned to the light sensor in transducer 80 is recorded as I₈₀. Activity element 124 then calculates the ratio of the two intensities as I₁ = I₅₀/I₈₀.

To determine flow rate, computational element 126 calculates the formula shown. The formula in computational element 126 is an interpolation based on parameters determined by a calibration shown in Fig. 7. The interpolation depends for accuracy on the requirement that duct area increases linearly with distance upwards from finger 70, and on the accuracy of the assumption that the intensity of light in beams 42 and 62 varies linearly with distance of float 30 from transducer units 50 and 80.

The flow rate value is provided either in a signal on path 47 or on display 87. After calculating flow rate and providing the flow rate value for use, microprocessor 82 delays further execution for 100 ms. as shown by activity element 130, and then reexecutes the loop of Fig. 6.

Fig. 7 discloses how the firmware executed by microprocessor 82 cooperates with an operator to calibrate the system. When calibration is requested by the operator pressing the calibrate key on keypad 84, activity element 150 causes the display unit 87 to prompt the operator to adjust flow rate through flowmeter 10 at a rate that just barely lifts float 30 from finger 70. Further instructions of activity element 150 indicate on display 87 the start of a 1 min. interval during which the operator holds a graduated container to receive liquid flowing from the outlet port 55. Where flow rates are large, a smaller time period, say 10 sec. may be suitable.

Conveniently, microprocessor 82 can time that interval with the instructions of activity element 156. When the 1 min. interval has expired, the instructions cause display unit 87 to indicate that the operator should, stop the flow or remove the container and then use keypad 84 to enter into microprocessor 82 the quantity of fluid held in the container. The instructions of activity element 160 cause microprocessor 82 to convert the amount of liquid in the container to the measured minimum flow rate and record same as FR_{M}. In one version the container may be graduated in flow rates based on a one minute interval rather than a volume, in which case microprocessor 82 can enter FR_{M} directly.

The instructions of activity element 163 then sequentially activate the light sources in transducer units 50 and 80. Units 50 and 80 should be sequentially activated to avoid interference of one light beam 42 or 62 by the other. The light intensities sensed by transducer units 50 and 80 are recorded respectively as I₅₀and I₈₀. Activity element 163 then calculates and records as I_{M} the ratio (I₅₀/I₈₀)_{MIN} for these values of I₅₀ and I₈₀.

Activity element 167 then prompts the operator to increase the fluid flow rate to somewhere near the level that shifts the position of float 30 to close to the top of duct 35, and for the operator to again run liquid into the container for 1 min.

Activity element 170 then prompts the operator to use keypad 84 to enter the amount of liquid in the container. The instructions of activity element 173 cause microprocessor 82 to convert the volume of liquid in the container to a near-maximum flow rate and record same as FR_{L}.

The instructions of activity element 176 then sequentially activate the light sources in transducer units 50 and 80. The light intensities sensed by transducer units 50 and 80 are recorded respectively as 150 and I. Activity element 163 then calculates and records as I_{L} the ratio (I₅₀/I₈₀)_{LRG} for these values of I₅₀ and I₈₀.

Instruction execution then returns to connector A 100 to calculate flow rates. The formula in calculation element 126 uses the parameters calculated by the firmware of Fig. 7 and the activities of the operator described in Fig. 7 to perform an interpolation between the two flow rates used by the firmware of Fig. 7. The accuracy of the calculation relies on linearities in the system. These are first, the linearly increasing area of duct 35, and second, the linear change in the intensity of light beams 42 and 62 sensed at transducer units 50 and 80 with changes in the distance between float 30 and the transducer units 50 and 80.

Since this process for interpreting the signal data relies on linear response of the sensor signal, it may be possible to linearize the sensor 60 signal digitally. Fig. 8 shows a possible system for accomplishing this function. The functionality of Fig. 8 may be incorporated in signal processor 20.

Fig. 8 shows an A/D converter 93 receiving the raw sensor 60 data on path 46. This data may be either time delay data for an ultrasound system, or light intensity data for a light-based system. If A/D converter 93 has an 8 bit output for example, this corresponds to 256 different output values. 256 values can provide accuracy of approximately .02 in. in specifying the position of a float 30 which has a range of movement of 5 in. within duct 35.

The digital output of A/D converter 93 is provided to a table lookup function within microprocessor 82. An EPROM or other non-volatile memory device 95 holds a linearization table with 256 entries. The entries have addresses ranging from 1 to 256. The values in the entries in memory device 95 have been preset to collectively specify linear values for the flow in duct 35.

Microprocessor 82 reads the value in memory device 95 having the address specified by the output of A/D converter 93. The value in the memory device 95 entry specified by the converter 93 output is supplied to D/A converter 97. The voltage output of converter 97 is linear with respect to flow in duct 35.

The values in memory device 95 are typically different for each combination of fluid and flowmeter 10. The memory device 95 linearization table entries are usually determined empirically.

In one version of the invention, memory device 95 may be a module that plugs into microprocessor 82. This module may contain a number of linearization tables. While commissioning a flowmeter system 10, the installer selects a particular one of these tables previously identified as suitable for the expected fluid. The selction process may be done using a personal computer having a USB port into which memory device 95 is plugged during commissioning. The selection software may be resident on memory device 95, Such software prompts the installer to identify the type of fluid carried by duct 35, and the answer to this prompt selects the correct linearization table for use by microprocessor 82.

## Claims

1. A flowmeter for providing a signal indicating fluid flow rate through the flowmeter, said flowmeter of the type having a vertical, tapered duct defined by a duct wall and having an axis extending the length of the duct, a first opening for receiving flow of fluid whose flow rate is to be measured, and a second opening from which the fluid exits the duct, and a float shifting position along the duct axis within the duct and whose vertical position in the duct indicates the fluid flow rate, said flowmeter further comprising:
a) window forming a portion of the duct wall in alignment with the duct axis, said window transparent to a signal beam and positioned adjacent to one opening of the duct;
b) a signal beam source external to the duct and adjacent to the window, and transmitting a signal beam through the window toward the float;
c) a feature of the float that reflects to the window a portion of the signal beam impinging on the float; and
d) a signal beam sensor external to the duct and receiving through the window, at least a portion of the signal beam reflected from the float, and providing a sensor signal indicating the level of light received by the light sensor.

2. The flowmeter of claim 1, including a circuit receiving the sensor signal and processing the signal.

3. The flowmeter of claim 2, further including:
a) memory device recording a linearization table having entries corresponding to a linear relationship between fluid flow and sensor output;
b) D/A converter receiving the output of the signal beam sensor and providing a digitized value of the signal beam sensor output;
c) a computing element receiving the D/A converter output selecting one entry from the memory device as a function of the D/A converter output and providing an output signal encoding the value recorded in the selected entry; and
d) an A/D converter receiving the selected entry value and providing an analog signal whose level corresponds to the selected entry value.

4. The flowmeter of claim 1, wherein the signal beam source is a light source and the signal beam sensor is a photodiode.

5. The flowmeter of claim 4, wherein the duct includes a window transparent to the light beam adjacent to each duct opening, a pair of light sources external to the duct, each adjacent to one window and each transmitting a light beam through the adjacent window toward the float, and a pair of light sensors external to the duct each adjacent to a window, and receiving through the adjacent window, a portion of the light beam returned from the float and previously transmitted toward the float, and providing a sensor signal indicating the level of the light beam received by the signal beam sensor.

6. The flowmeter of claim 4, wherein the float comprises material that returns by reflection, a portion of the light beam striking the float.

7. The flowmeter of claim 4, wherein the float comprises material that returns by diffusion, a portion of the light beam striking the float.

8. The flowmeter of claim 4, wherein the float comprises material that returns by reflection, light striking the float.

9. The flowmeter of claim 4, wherein the float comprises material that returns by diffusion, light striking the float.

10. The flowmeter of claim 4, wherein the float comprises material that returns by diffraction, light striking the float.

11. The flowmeter of claim 4 wherein the cross section area of the duct varies linearly along the duct axis.

12. The flowmeter of claim 11, including a controller receiving sensor signals from the light sensors for two different fluid flow rates, computing the ratio of the sensor signals for each flow rate, and determining therefrom a third fluid flow rate.

13. The flowmeter of claim 1, wherein the signal beam source is a source of ultrasound, and the signal beam sensor is an ultrasound detector.

14. The flowmeter of claim 13, wherein the duct includes a window transparent to an ultrasound beam adjacent to each duct opening, a pair of ultrasound beam. sources external to the duct, each adjacent to one window, and each transmitting an ultrasound beam through the adjacent window toward the float, and a pair of ultrasound sensors external to the duct each adjacent to a window, and receiving through the adjacent window, a portion of the ultrasound beam returned from the float and previously transmitted toward the float, and providing a sensor signal indicating the level of the ultrasound beam received by the signal beam sensor.

15. The flowmeter of claim 13, wherein the float comprises material that returns by reflection, a portion of the ultrasound beam striking the float.

16. The flowmeter of claim 13, wherein the same transducer functions as the signal source and the signal detector.

17. The flowmeter of claim 13, wherein the cross section area of the duct varies linearly along the duct axis.

18. The flowmeter of claim 13, wherein the controller includes a timer for measuring the transit time for an ultrasound pulse to travel from the ultrasound source to the ultrasound detector.

19. The flowmeter of claim 1, wherein the float has a bore extending axially through the entire float, and. further including a guide rod extending axially along the length of the duct and through the bore in the float.

20. The flowmeter of claim 1, including:
a) a circuit receiving the sensor signal and processing the signal; and
b) a temperature sensor in the duct providing a temperature signal to the circuit.
